(19) **Europäisches Patentamt / European Patent Office / Office européen des brevets**

(11) **EP 4 265 479 A1**

(12) # EUROPEAN PATENT APPLICATION

(43) Date of publication:
**25.10.2023 Bulletin 2023/43**

(21) Application number: **22169334.4**

(22) Date of filing: **21.04.2022**

(51) International Patent Classification (IPC):
**B60R 1/00** *(2022.01)* **G06T 7/579** *(2017.01)*
**G06T 7/80** *(2017.01)*

(52) Cooperative Patent Classification (CPC):
**B60R 1/27; G06T 7/579; G06T 7/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayerische Motoren Werke Aktiengesellschaft 80809 München (DE)**

(72) Inventors:
• **Kuhn, Christopher**
  **80798 München (DE)**
• **Petrovic, Goran**
  **80937 München (DE)**
• **Hofbauer, Markus**
  **81549 München (DE)**
• **Steinbach, Eckehard**
  **82140 Olching (DE)**

(54) **COMPUTING DEVICE AND COMPUTER-IMPLEMENTED METHOD FOR GENERATING MULTI-VIEW VIDEO STREAMS**

(57)    A computing device (1) is programmed to: receive (21) image data corresponding to at least two individual camera views of an environment of a vehicle (3); receive (22) information about a current driving of the vehicle (3); attribute (23) a view priority to each of the individual camera views based on the information about the current driving situation; and generate (24) an individual video stream from the image data for each of the individual camera views in dependence on the view priorities.

Fig.1A

EP 4 265 479 A1

**Description**

This specification refers to a computing device and to a computer-implemented method for generating multi-view video streams. In particular, a traffic-aware multi-view video stream adaptation scheme for teleoperated driving applications is proposed.

Teleoperated driving (TOD) is an important step towards autonomous driving. It allows to safely resolve failures of automated vehicles [13]. In TOD, a human operator controls a vehicle from a remote location while perceiving the entire traffic situation via video streams from multiple cameras [8].

For example, Gnatzig et al. [8] proposed a system design for teleoperated road vehicles. The setup consists of a vehicle equipped with multiple cameras streaming the encoded camera data to a remote workstation while receiving the control commands of the human operator. Georg et al. [6] used this setup to evaluate the performance of conventional displays and head-mounted displays (HMDs) and proposed the design of an immersive interface for teleoperation [5]. Hosseini et al. investigated immersion and delay compensation by using mixed-reality and predictive displays [10,11]. In [12], the authors provided haptic feedback to the operator for an improved lateral control of the vehicle.

While the scientific works mentioned above mainly focus on the display of sensor information or the control of the vehicle, the problems related to video transmission for TOD applications has not received as much attention yet.

In Ref. [7], the authors conducted a five-week long-time user study to measure the impact of different displays and video quality levels on the situation awareness of the operator. The results show that the video quality has a significant influence on several factors of the situation awareness. These factors include the detection of traffic signs or the perception of road users in situations with changing light conditions. These findings support the view that a reliable low delay video transmission is crucial for the operator to control the vehicle safely. This is particularly relevant for mobile networks with oscillating and limited transmission rates such as available in teleoperated driving.

Existing approaches to optimizing video transmission in the field of TOD mainly focus on the adaptation of an individual camera view [2] or try to achieve an equal quality for all camera views jointly [16]. For example, Dror et al. [2] proposed a content adaptive video compression scheme to improve the video quality for the remote operator. The authors encoded object regions detected by a state-of-the-art object detection network with a higher video quality compared to the remaining content. This improved the peak signal-to-noise ratio (PSNR) for object regions within a single camera view based on a given target bitrate. However, the authors relied on quantization parameter delta maps to achieve the different quality levels within a single frame. Such features are often not supported by the limited configuration possibilities of the video encoding hardware in commercial vehicles [9]. In contrast to optimizing the quality of a single camera view, a joint rate controller proposed by Zhang et al. [16] tries to achieve a similar quality for all views.

It is an object of the present invention to overcome or mitigate shortcomings of solutions known in the art, such as the ones mentioned above. For example, it is an object to provide an adaptation scheme for multi-view video streaming that provides a TOD operator with the best possible scene understanding while matching the available network resources.

This object is solved by a computing device, a computer-implemented method, and a computer program according to the independent claims. Preferred embodiments are the subject matter of the dependent claims.

It should be noted that additional features of a claim dependent on an independent claim may, without the features of the independent claim or in combination with a subset of the features of the independent claim, constitute a separate invention independent of the combination of all features of the independent claim, which may be the subject of an independent claim, a divisional application, or a subsequent application. The same applies to technical teachings described in the description, which may constitute an invention independent of the features of the independent claims.

For example, the features presented below which refer to an application of an ROI mask or filter having block shaped borders (in particular, with each border block matching a pixel block size of an encoder) may be applied very generally in the field of image or video encoding, i.e., they are not limited to the application context of multi-view video streaming or, even more specifically, TOD.

According to a first aspect of the invention, a computing device is presented. The computing device is programmed to: receive image (e.g., video) data corresponding to at least two individual camera views of an environment of a vehicle; receive information about a current driving situation of the vehicle; attribute a view priority to each of the individual camera views based on the information about the current driving situation; and generate an individual video stream from the image data for each of the individual camera views in dependence on the view priorities.

Regarding the step of receiving image data corresponding to at least two individual camera views of the environment of a vehicle, it should be noted that, as used in this specification, the term vehicle shall be understood in a broad sense. For example, the term vehicle includes passenger cars, busses, commercial vehicles, transport vehicles, drones, robots, motorboats, ships, agricultural vehicles, railway vehicles and others. In particular, the vehicle may be car, such as a passenger car.

Further, the vehicle may be an automated vehicle configured for teleoperated driving (TOD) by a remote human operator. The vehicle may be equipped with multiple cameras streaming video data to a remote workstation of the human operator.

Regarding the step of receiving information about the current driving situation, it should be noted that this information may include, for example, vehicle status information (i.e., information about a state of the vehicle) and/or information about a traffic situation the vehicle is in, including, e.g., surrounding objects, obstacles, or the like. Such information about the current driving situation may be acquired directly, e.g., through one or more sensors, such as cameras or vehicle status sensors, and/or indirectly, e.g., by means of gaze tracking of the remote operator. With such an approach, one may systematically favor the camera views that are most important for the operator, resulting in a higher priority and consequently in a higher streaming quality for these important views.

In an embodiment, the information about the current driving situation comprises information about a current state of the vehicle, and the computing device is programmed to attribute the respective view priority to each of the individual camera views in dependence on the information about the current state of the vehicle. Optionally, the view priority attributed to a camera view may further depend on an orientation (e.g., relative to the vehicle) of a camera providing that camera view.

In an embodiment, the information about the current state of the vehicle may comprise one or more of a steering angle, a velocity, and a gear position of the vehicle.

For example, the computing device may be programmed to attribute the respective view priority to each of the individual camera views in dependence on the yaw angle of the respective camera view relative to the steering angle of the vehicle.

Alternatively or additionally, the computing device may be programmed to attribute a higher view priority to a camera view pointing towards (such as essentially in a direction of) a current trajectory of the vehicle as compared to a camera view pointing further away from the current trajectory of the vehicle.

Further, the computing device may be programmed to weight the relative priority of a camera view pointing towards a current trajectory with a velocity dependent term. For example, this weighting may be done such that the priority increases with increasing velocity. Such a prioritization may be advantageous based on the recognition that the operator (just like an actual driver of a vehicle) tends to focus more on the vanishing point at higher speeds, e.g., when driving on a highway.

In an embodiment, the information on the current driving situation comprises information about a current traffic situation the vehicle is in, wherein the computing device is programmed to attribute the respective view priority to each of the individual camera views in dependence on the information about the current traffic situation. For example, this may include a machine learning (ML) based detection of relevant objects and/or obstacles in the surrounding of the vehicle.

Additionally or alternatively, such information about the current traffic situation the vehicle is in may be acquired by means of gaze tracking of the remote operator. For example, in an embodiment, the computing device is programmed to receive gaze tracking information indicating which of the individual camera views a teleoperator of the vehicle is currently using and to attribute the respective view priority to each of the individual camera views in dependence on the gaze tracking information. In other words, the operator's gaze can be tracked, and if the operator looks at a specific camera view, the view priority can, for example, be shifted to that view.

In an embodiment, the computing device is programmed to calculate an individual bit budget or an individual target quality for each camera view based on a total available transmission rate and the view priorities and to generate the individual video streams in accordance with the respective bit budgets or target qualities.

For example, generating the individual video stream may comprise: for each of the individual camera views and the associated individual bit budget or individual target qualities, determining a combination of a spatial resolution (e.g., a frame size) and a temporal resolution (e.g., a frame rate) so as to maximize a resulting video quality; and encoding the image data corresponding to the individual camera view based on the respective spatial resolution and temporal resolution. In other words, the video quality for a single camera view may be optimized by considering the spatial and temporal resolution of the video. As a result of applying such a multi-dimensional adaptation scheme, a perceptual video quality of each individual video stream may be further improved.

It is also within the scope of the present invention that generating the individual video stream may comprise applying to the image data of each of the individual camera views a region of interest (ROI) mask, wherein the ROI may be dynamically adapted in dependence on the vehicle state, such as in dependence on the current steering angle of the vehicle. Additionally or alternatively to the steering angle, the ROI mask may be dynamically adapted in dependence on the velocity of the vehicle (e.g., based on the recognition that the vanishing point tends to be more important at higher velocities, as mentioned above).

In an embodiment, an ROI defined by such an adaptive/dynamic ROI mask may have elliptical borders, at least in sections and when viewed in a resolution across many pixels. In other words, a transparent part of the mask may exhibit essentially the shape of an ellipse or of a part of an ellipse, at least when viewed in a resolution that averages over many pixels.

For example, the ROI mask may define an ROI having block-shaped borders, the block-based borders being formed by a plurality of border blocks. The effect of the mask is that in each border block all pixels are either completely unaffected (i.e., the mask is transparent for all pixels of a given border block) or completely masked, i.e., the mask is completely intransparent or "black" for all pixels of a given border block, such that all these pixels are evaluated as zero, or the like.

The border blocks may have a predetermined pixel block size of a few (such as less than 20 or even less than 10) pixels times a few (such as less than 20 or even less than 10) pixels. For example, the border blocks may be quadratic in size. For example, the pixel block size may be 8x8 pixels.

Referring again to the above-mentioned embodiment of an ROI mask having an at least partially elliptical shape, a plurality of border blocks may be arranged so as to form a block-shaped border having the shape of a section of an ellipse when viewed in a resolution that averages over a large number of pixels (for example, as compared to a pixel block size of the border blocks).

In an embodiment, generating the individual video streams comprises encoding the image data filtered by the ROI mask by means of an encoder (e.g., a video encoder that is also configured to perform a multi-dimensional adaptation scheme as described above) which operates based on a predetermined pixel block size, wherein each border block matches the pixel block size of the encoder. In other words, if the encoder takes, for example, 8x8-pixel blocks and processes them block by block, the border block size may also be chosen to be 8x8 pixels. As a result, the border blocks may be encoded (each as a whole) by the encoder in a particularly efficient way.

According to a second aspect of the invention, a computer-implemented method for generating multi-view video streams (e.g., for TOD) comprises: receiving image (such as video) data corresponding to at least two individual camera views of an environment of a vehicle; receiving information about a current driving situation of the vehicle; attributing a view priority to each of the individual camera views based on the information about the current driving situation; and generating an individual video stream from the image data for each of the individual camera views in dependence on the view priorities.

For example, the computing device according to the first aspect may be configured to execute some or all of the steps of the method according to the first aspect as described above. Hence, the explanations and descriptions of embodiments of the method according to the first aspect, which are given above and in the following, may analogously apply to embodiments of the method according to the second aspect - and vice versa.

In a third aspect of the invention, a computer program comprises instructions which, when the program is executed by a computing device (such as a computing device according to the first aspect), cause the computing device to carry out the steps as specified above in connection with embodiments of the first or second aspect of the invention.

In a fourth aspect of the invention, a data carrier comprises instructions which, when executed by a computing device (such as a computing device according to the first aspect), cause the computing device to carry out the steps as specified above. For example, the data carrier may be configured as a computer-readable storage medium or as a data carrier signal carrying the computer program according to the third aspect.

In accordance with some embodiments described above and in the following, the invention is based on the recognition that, in the context of TOD, the importance of individual camera views highly depends on the current driving situation [9]. While all video streams together need to match a currently available transmission rate, individual streams can be encoded differently based on their importance for the current traffic situation and/or based on the current vehicle state. In other words, rather than trying to maintain a similar quality for all camera views, it is proposed to estimate a target bitrate distribution that favors specific camera views and provides them with a higher quality based on the current driving situation. As a result, especially in situations where a low network transmission rate is available, the prioritization of important camera views can still provide the operator with a sufficient quality on those important camera views [14].

Those skilled in the art will recognize additional features and advantages upon reading the following detailed description, and upon viewing the accompanying drawings.

Reference will now be made in detail to various embodiments, one or more examples of which are illustrated in the figures. Each example is provided by way of explanation and is not meant as a limitation of the invention. For example, features illustrated or described as part of one embodiment can be used on or in conjunction with other embodiments to yield yet a further embodiment. It is intended that the present invention includes such modifications and variations. The examples are described using specific language which should not be construed as limiting the scope of the appended claims. The drawings are not scaled and are for illustrative purposes only. For clarity, the same elements or manufacturing steps have been designated by the same references in the different drawings if not stated otherwise.

Figs. 1A-B    each schematically and exemplarily illustrate a computing device in accordance with one or more embodiments.

Fig. 2    schematically and exemplarily illustrates steps of a computer-implemented method for generating multi-view video streams in accordance with one or more embodiments.

Fig. 3    schematically and exemplarily illustrates a vehicle with multiple cameras providing multiple individual camera views of an environment of a vehicle.

Fig. 4A    exemplarily shows ROI filtered images corresponding to two different camera views of an environment of a vehicle.

Fig. 4B    is an enlarged view of a section of Fig. 4A (left panel), highlighting border blocks at the border of an ROI defined by an ROI mask.

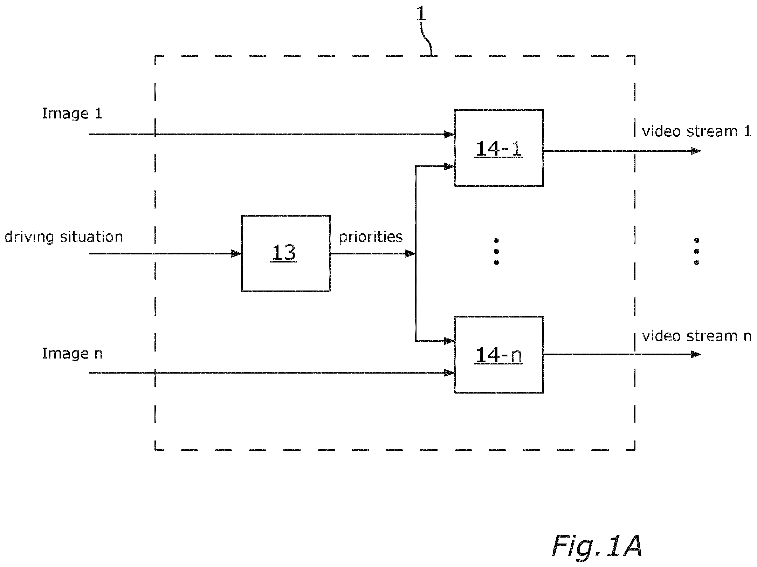

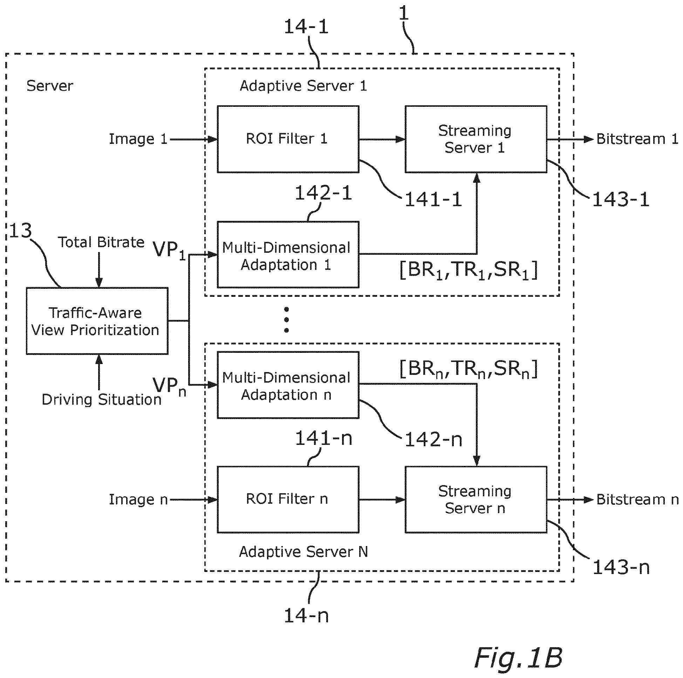

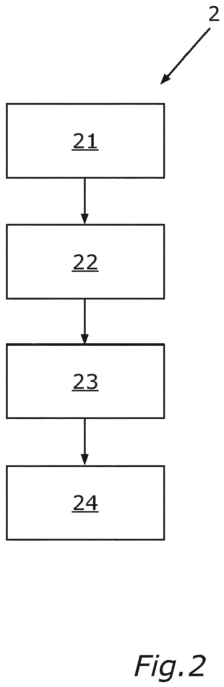

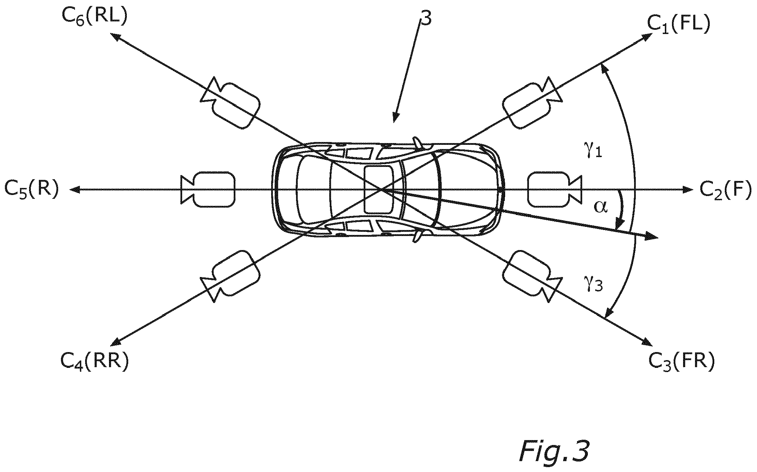

Figs. 1A and 1B each schematically and exemplarily illustrate an embodiment of computing device 1 (designated as a "Server" in Fig. 1B). Each of the computing devices 1 may be configured to carry out steps 21-24 of a computer-implemented method 2 for generating multi-view video streams as schematically illustrated in the form of a process diagram in Fig. 2. The method 2 may be applied in the context of teleoperated driving (TOD) of an automated vehicle, such as the vehicle 3 shown in Fig. 3.

As illustrated in Fig. 3, the vehicle 3 is equipped with six cameras which provide six different camera views $C_i$ ($i = 1, 6$) of an environment of a vehicle 3. For example, $C_1$ is a front left ("FL") view and $C_4$ is a rear right ("RR") view.

Generally, a remote operator controlling an automated vehicle such as the vehicle 3 in Fig. 3 remotely perceives the current traffic scenario via video streams of the multiple (such as $n$) camera views $C_i$ ($i = 1, ...,n$). It is necessary to provide a low delay video transmission to the operator, so as to be able to resolve errors and ensure safety.

In order to provide the remote operator with the best possible situation awareness while matching the available transmission resources, an adaptation scheme for the individual video streams of all camera views $C_i$ is implemented by carrying out the steps 21-24 of the computer-implemented method 2 illustrated in Fig. 2. The method comprises: receiving 21 image data corresponding to at least two (in the present exemplary embodiment: $n = 6$) individual camera views $C_i$ of an environment of a vehicle 3; receiving 22 information about a current driving situation of the vehicle 3; attributing 23 a respective view priority $VP_i$ to each of the individual camera views $C_i$ based on the information about the current driving situation; and generating 24 an individual video stream from the image data for each of the individual camera views $C_i$ in dependence on the view priorities $VP_i$.

As mentioned above, the method 2 may be carried out by means of a computing device 1, exemplary embodiments of which are shown in Figs. 1A and 1B. Accordingly, the computing device 1 is in each case programmed to: receive 21 image data corresponding to at least two individual camera views $C_i$ of an environment of a vehicle 3; receive 22 information about a current driving situation of the vehicle 3; attribute 23 a respective view priority $VP_i$ to each of the individual camera views $C_i$ based on the information about the current driving situation; and generate 24 an individual video stream from the image data for each of the individual camera views $C_i$ in dependence on the view priorities $VP_i$.

Based on the recognition that the current driving situation has a high influence on the importance of individual camera views $C_i$, the proposed multi-view video stream adaptation scheme controls the individual video streams according to the current driving situation.

For example, a traffic-aware view prioritization may be carried out by means of a software module that is executable on the computing device 1 and that will be referred to as a prioritization module 13 in the following. As schematically illustrated in Figs. 1A-B, the prioritization module 13 receives information about the current driving situation and puts out relative view priorities $VP_i$ for the individual camera views $C_i$ that are determined in dependence on the current driving situation. For example, the prioritization module 13 may estimate a relative view priority $VP_i$ in percent for each camera view $C_i$.

Considering the resulting priorities $VP_i$ of the individual camera views $C_i$ and a total available transmission rate $BR_{total}$, every camera view $C_i$ may be assigned a certain bit budget $BR_i$. To this end, the computing device 1 may be programmed to calculate an individual bit budget $BR_i$ or an individual target quality for each camera $C_i$ view based on the total available transmission rate $BR_{total}$ and the view priorities $VP_i$ and to generate 24 the individual video streams in accordance with the respective bit budgets $BR_i$ or target qualities.

The total available bit rate $BR_{total}$ can be estimated with approaches known in the art, such as the one described in Ref. [4].

For example, the prioritization module 13 may receive information about a total available bit rate $BR_{total}$ and calculate the available bit budget $BR_i$ for each camera view $C_i$ according to the formula:

$$BR_i = VP_i \cdot BR_{total}$$

The bit budget $BR_i$ estimated for every camera view $C_i$ ($i = 1, ..., n$) may specify a target bitrate for an associated adaptive streaming module 14-1, ..., 14-n, as illustrated in Figs.1A and 1B. Each streaming module 14-1, ..., 14-n receives the image data (Image 1, ..., Image n) from the respective camera view $C_i$ ($i = 1, ...,n$) as well as the respective view priority $VP_i$ and/or target bitrate $BR_i$ as provided by the prioritization module 13 and generates 24 a respective (video) bit stream in dependence on these inputs.

Turning now in more detail to the prioritization scheme, the prioritization module 13 may be configured to estimate the relative importance and hence the view priority $VP_i$ of every camera view $C_i$ based on the vehicle's real time movement in traffic, including vehicle state information. This may include, for example, one or more of a steering angle, a velocity, and a gear position of the vehicle 3, as well as the orientations of the individual cameras.

For example, the prioritization module 13 may be a software module that is configured to attribute the respective view priority to each of the individual camera views $C_i$ in dependence on the yaw angle $\gamma_i$ of the respective camera view $C_i$ relative to the current steering angle $\alpha$ of the vehicle.

Fig. 3 exemplarily illustrates a definition of the yaw angles $\gamma_i$ ($i = 1, 3$) of camera views $C_i$ ($i = 1, 3$) relative to the vehicle's steering angle $\alpha$ for vehicle setup with a total of $n = 6$ camera views $C_i$ and $n = 6$ camera yaw angles $\gamma_i \in (-\pi, \pi]$, wherein $\gamma_1$ and $\gamma_3$ are explicitly depicted in Fig. 2 as examples. The other yaw angles $\gamma_i$ ($i = 2,4,5,6$) are defined analogously.

For example, the prioritization module 13 may assign every camera view $C_i$ its specific priority score $VP_i$ based on $\gamma_i$ as follows:

$$VP_i = \begin{cases} 4 + \max(0, c \cdot v) & \text{for } |\gamma_i| < \frac{\pi}{4} \\ 2 & \text{for } |\gamma_i| < \frac{\pi}{2} \\ 1 & \text{else,} \end{cases}$$

with the vehicle velocity $v$ as measured in km/h (or, in another variant, as measured in m/s) and a speed constant $c = 0.1$. Finally, all the individual priority scores $VP_i$ may be normalized by the sum over all view priority scores $\sum_{i=1}^{n} VP_i$ .

It should be understood that the above formula above is merely a preferred example and that, while the structure of the formula may be the same in other embodiments, the numerical value of the constant c as well as the numerical score values (here: 1, 2, and 4) may be chosen differently.

The above formula for calculating the priority scores $VP_i$ attributes a higher view priority (resulting in a higher video transmission quality) for camera views $C_i$ pointing towards the current trajectory of the vehicle 3 as compared to camera views $C_i$ pointing further away from the current trajectory of the vehicle 3.

In addition, the camera views $C_i$ pointing towards the current trajectory are weighted with the velocity dependent offset term $\max(0, c \cdot v)$, as the driver generally focuses more on the vanishing point for higher speeds [1]. The maximum function ensures that the offset does not become negative at negative velocities $v$.

Further, the gear position may be considered, e.g., in order to favor the rear facing camera views $C_i$ for reverse driving. For example, if a reverse driving is detected based on the gear position, the prioritization may be inverted, e.g., by swapping priorities of "rear" and "front" views, and optionally further swapping priorities of "left" and "right" views.

The information on the current driving situation, which the prioritization module 13 relies on to determine the view priorities $VP_i$, may also comprise information about a current traffic situation the vehicle 3 is in. For example, this may involve a machine learning (ML) based detection of relevant objects and/or obstacles in the surroundings of the vehicle 3.

Additionally or alternatively, information about the current traffic situation the vehicle 3 is in may be acquired indirectly by means of gaze tracking of the remote operator. For example, the prioritization module 13 may be configured to receive gaze tracking information indicating which of the individual camera views $C_i$ the teleoperator of the vehicle 3 is currently using and to attribute the respective view priority $VP_i$ to each of the individual camera views $C_i$ in dependence on this gaze tracking information. In other words, the operator's gaze can be tracked, and if the operator looks at a specific camera view $C_i$, the view priority can be shifted towards that view $C_i$.

Once the prioritization module 13 has determined the view priorities $VP_i$ and the corresponding individual bit budgets $BR_i$ for the camera views $C_i$, the video quality of each individual camera view $C_i$ may be optimized by means of a respective software module 14-1, ..., 14-n, which will be referred to as adaptive module in the following. The respective adaptive module 14-1, ..., 14-n is configured to select optimal streaming parameters for the respective camera view $C_i$ and to control the respective video stream accordingly.

For example, the step of generating 24 the individual video streams may comprise: for each of the individual camera views $C_i$ and the associated individual bit budgets $BR_i$ or individual target qualities, determining a combination of a spatial resolution $S_i$ (e.g., a frame size) and a temporal resolution $T_i$ (e.g., a frame rate) so as to maximize a resulting video quality; and encoding the image data corresponding to the individual camera view $C_i$ based on the respective spatial resolution $S_i$ and the respective temporal resolution $T_i$.

Specifically, it may be provided that the video quality of each individual video stream is optimized for the given bit budget $BR_i$ using a quality-of-experience-driven multi-dimensional adaptation (MDA) scheme such as the one proposed in [15]. The MDA scheme selects the best possible combination of spatio-temporal resolution (frame size and frame rate) for the encoder to maximize the resulting video quality. Ref. [15] uses the Multi-Dimensional Video Quality Metric (MDVQM) to measure the perceptual video quality. MDVQM was specifically designed to consider the influence of the spatio-temporal resolution on the video quality.

As schematically illustrated in Fig. 1B, a dedicated sub-module 141-1, ..., 141-n of the adaptive module 14-1, ..., 14-n may be configured to estimate an optimal parameter set, comprising the target bitrate $BR_i$, the spatial resolution $S_i$, and the temporal resolution $T_i$, for each camera view $C_i$. Depending on these parameter sets, the encoders or streaming servers 143-1, ..., 143-n may then generate the respective video stream for each camera view $C_i$ individually.

Based on the recognition that not all parts in an image are of similar importance for a remote operator, the authors of Ref. [3] suggest to apply a static mask on the camera frame to reduce the image content to be encoded.

Similarly, in an embodiment of the present invention, a region of interest (ROI) mask may be applied (e.g., in particular, to the rear-facing camera views), wherein all pixels outside of an ROI defined by mask are set to zero. The pixels inside the ROI are not affected. The ROI mask thus removes less important areas from the image which reduces the required bitrate. Encoding such preprocessed frames increases the image quality of the unaffected image parts for the same target bitrate. This can be explained as the encoder treats the remaining zero-regions with skip-mode.

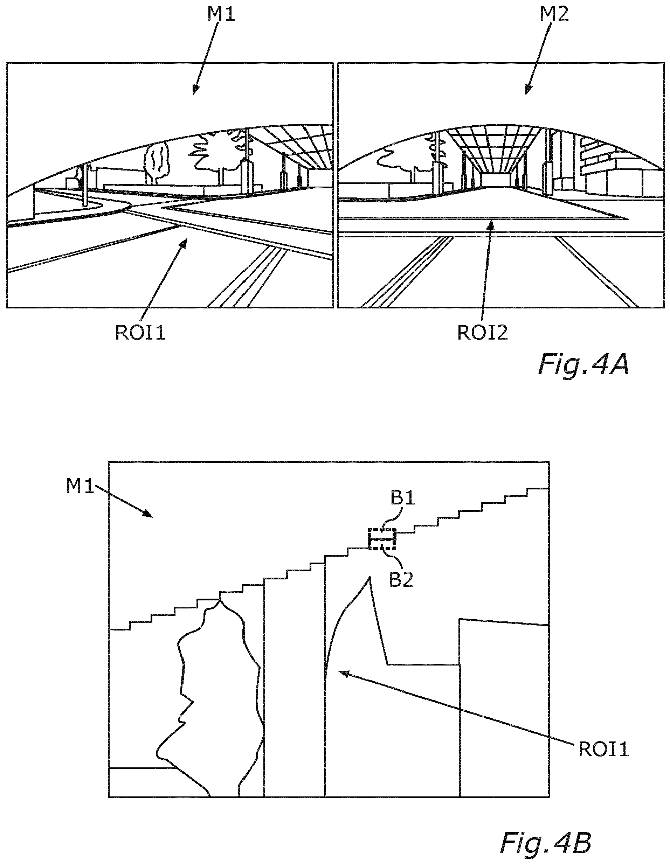

Fig. 4A exemplarily shows two ROI filtered images corresponding to two different camera views of an environment of a vehicle 3: The left panel of Fig. 4A shows a left-facing camera view, wherein a first ROI mask M1 defining a first region of interest ROI1 has been applied to the camera image. The right panel of Fig. 4A shows a front-facing camera view, wherein a second ROI mask M2 defining a second region of interest ROI2 has been applied to the camera image.

In accordance with some embodiments of the method 2 proposed here, the step of generating 24 the individual video streams comprises applying to the image data of each of the individual camera views $C_i$ such an ROI mask M1, M2, wherein the region of interest mask M1, M2 may be dynamically adapted in dependence on the steering angle $\alpha$ of the vehicle 3. For example, the ROI masks M1, M2 may be dynamically adapted in dependence on the yaw angle $\gamma_i$ of the respective camera view $C_i$ relative to the current steering angle $\alpha$ of the vehicle (see Fig. 3 and the related description above). Further, the ROI masks M1, M2 may be dynamically adapted in dependence on the vehicle speed. Here, the underlying idea is that different ROIs are important for the remote driver depending on the driving situation. For example, when driving straight with a higher speed, the driver focuses towards the vanishing point [1]. For turning maneuvers or driving at slower speeds, the required field of view for the human driver increases. To this end, the present invention extends the idea of Ref. [3] from a static mask to a dynamic mask changing its shape based on the vehicle's steering angle and/or velocity.

As can be seen in Fig. 4A, the proposed dynamic ROI masks M1, M2 may have an essentially elliptical shape. More precisely, the adaptive ROI masks M1, M2 may exhibit elliptical borders, at least in sections and when viewed in a resolution across many pixels.

However, a closer look reveals that each of the ROI masks M1, M2 defines a respective region of interest ROI1, ROI2 having block-shaped borders. This is exemplarily illustrated in Fig. 4B, which shows an enlarged view of a section of the left panel of Fig. 4A, highlighting border blocks B1, B2 at the border of the first region of interest ROI1 defined by the first ROI mask M1. The block-based borders are formed by a plurality of border blocks B1, B2. The effect of the ROI mask M1 is that in each border block all pixels are either completely unaffected (see, e.g., border block B2) or completely masked (see, e.g., border block B1).

Fig. 1B shows dedicated sub-modules 141-1, ..., 141-n of the adaptive modules 14-1, ..., 14-n, which are configured to perform the ROI filtering and to provide the ROI filtered image date to the encoders 143-1, ..., 143-n. Each encoder 143-1, ..., 143-n may operate based on a predetermined pixel block size, wherein each border block B1, B2 of the ROI masks M1, M2 matches the pixel block size of the encoder 143-1, 143-n. Here, the underlying idea is the following: A priori, along the curve of the ellipse defining the masks M1, M2, the masking step would create blocks for the encoder that are partially masked. To optimize the masking process for the encoder, a block-based mode is proposed. In this mode, the elliptical curve of each of the ROI masks M1, M2 is created in blocks (e.g., B1, B2) matching the block size of the encoders 143-1, ..., 143-n. Applying such a block-based mask M1, M2 ensures that a block B1, B2 is either completely set to zero or completely unaffected by the ROI filter M1, M2. This optimization further reduces the bitrate required for encoding the ROI filtered video stream.

References

[1] Tito Lu Tang Chen. Methods for Improving the Control of Teleoperated Vehicles. PhD thesis, 2014.

[2] Itai Dror, Raz Birman, and Ofer Hadar. Content adaptive video compression for autonomous vehicle remote driving. In Andrew G. Tescher and Touradj Ebrahimi, editors, Applications of Digital Image Processing XLIV, page 29, San Diego, United States, August 2021. SPIE.

[3] Vadim Furman, Andrew Hughes Chatham, Abhijit Ogale, and Dmitri Dolgov. Image and video compression for remote vehicle assistance, September 2017.

[4] Kai Gao, Jingxuan Zhang, Y Richard Yang, and Jun Bi. Prophet: Fast Accurate Model-based Throughput Prediction for Reactive Flow in DC Networks. IEEE INFOCOM, page 9, 2018.

[5] Jean-Michael Georg and Frank Diermeyer. An Adaptable and Immersive Real Time Interface for Resolving System Limitations of Automated Vehicles with Teleoperation. In 2019 IEEE International Conference on Systems, Man and Cybernetics (SMC), pages 2659-2664, Bari, Italy, October 2019. IEEE.

[6] Jean-Michael Georg, Johannes Feiler, Frank Diermeyer, and Markus Lienkamp. Teleoperated Driving, a Key Technology for Automated Driving? Comparison of Actual Test Drives with a Head Mounted Display and Conventional Monitors. In 2018 21st International Conference on Intelligent Transportation Systems (ITSC), pages 3403-3408, Maui, HI, November 2018. IEEE.

[7] Jean-Michael Georg, Elena Putz, and Frank Diermeyer. Longtime Effects of Videoquality, Video- canvases and Displays on Situation Awareness during Teleoperation of Automated Vehicles *. In 2020 IEEE International Conference on Systems, Man, and Cybernetics (SMC), pages 248-255, Toronto, ON, Canada, October 2020. IEEE.

[8] Sebastian Gnatzig, Frederic Chucholowski, Tito Tang, and Markus Lienkamp. A system design for teleoperated road vehicles. In Proceedings of the 10th International Conference on Informatics in Control, Automation and Robotics - Volume 1: ICINCO, pages 231-238. INSTICC, SciTePress, 2013.

[9] Markus Hofbauer, Christopher Kuhn, Goran Petrovic, and Eckehard Steinbach. Adaptive multiview live video streaming for teledriving using a single hardware encoder. In 2020 IEEE International Symposium on Multimedia (ISM), pages 9-16, Naples, Italy, 2020.

[10] Amin Hosseini and Markus Lienkamp. Enhancing telepresence during the teleoperation of road vehicles using HMD-based mixed reality. In 2016 IEEE Intelligent Vehicles Symposium (IV), pages 1366-1373, Gotenburg, Sweden, June 2016. IEEE.

[11] Amin Hosseini and Markus Lienkamp. Predictive safety based on track-before-detect for teleoperated driving through communication time delay. In 2016 IEEE Intelligent Vehicles Symposium (IV), pages 165-172, Gotenburg, Sweden, June 2016. IEEE.

[12] Amin Hosseini, Florian Richthammer, and Markus Lienkamp. Predictive Haptic Feedback for Safe Lateral Control of Teleoperated Road Vehicles in Urban Areas. In 2016 IEEE 83rd Vehicular Technology Conference (VTC Spring), pages 1-7, Nanjing, China, May 2016. IEEE.

[13] Lei Kang, Wei Zhao, Bozhao Qi, and Suman Banerjee. Augmenting self-driving with remote control: Challenges and directions. In Proceedings of the 19th International Workshop on Mobile Computing Systems & Applications, pages 19-24, 2018.

[14] Stefan Neumeier, Simon Stapf, and Christian Facchi. The Visual Quality of Teleoperated Driving Scenarios How good is good enough? In 2020 International Symposium on Networks, Computers and Communications (ISNCC), pages 1-8, Montreal, QC, Canada, October 2020. IEEE.

[15] Fan Zhang, Eckehard Steinbach, and Peng Zhang. Mdvqm: A novel multidimensional no-reference video quality metric for video transcoding. J. Vis. Comun. Image Represent., 25(3):542-554, April 2014.

[16] Hang Zhang, Jiahao Li, Bin Li, and Yan Lu. A Deep Reinforcement Learning Approach to Multiple Streams' Joint Bitrate Allocation. IEEE Transactions on Circuits and Systems for Video Technology, 31(6):2415-2426, June 2021.

## Claims

1. A computing device (1) being programmed to:

   - receive (21) image data corresponding to at least two individual camera views of an environment of a vehicle (3);
   - receive (22) information about a current driving situation of the vehicle (3);
   - attribute (23) a view priority to each of the individual camera views based on the information about the current driving situation; and
   - generate (24) an individual video stream from the image data for each of the individual camera views in dependence on the view priorities.

2. The computing device (1) of claim 1, **characterized in that** the information about the current driving situation comprises information about a current state of the vehicle (3) and that the computing device (1) is programmed to attribute (23) the respective view priority to each of the individual camera views in dependence on the information about the current state of the vehicle (3).

3. The computing device (1) of claim 2, **characterized in that** the information about a current state of the vehicle (3) comprises one or more of: a steering angle, a velocity, and a gear position.

4. The computing device (1) of claim 3, **characterized in that** the computing device (1) is programmed to attribute (23) the respective view priority to each of the individual camera views in dependence on the yaw angle of the respective camera view relative to the steering angle of the vehicle (3).

5. The computing device (1) of one of the preceding claims, **characterized in that** the computing device (1) is programmed to attribute (23) a higher view priority to a camera view pointing towards a current trajectory of the vehicle (3) as compared to a camera view pointing further away from the current trajectory of the vehicle (3).

6. The computing device (1) of one of claims 3 to 5, **characterized in that** the computing device (1) is programmed to weight the relative priority of a camera view pointing towards a current trajectory with a velocity dependent term, such that the priority increases with increasing velocity.

7. The computing device (1) of one of the preceding claims, **characterized in that** the information about the current driving situation comprises information about a current traffic situation the vehicle (3) is in, and that the computing device (1) is programmed to attribute (23) the respective view priority to each of the individual camera views in dependence on the information about the current traffic situation.

8. The computing device (1) of one of the preceding claims, **characterized in that** the computing device (1) is programmed to receive gaze tracking information indicating which of the individual camera views a teleoperator of the vehicle (3) is currently using and to attribute (23) the respective view priority to each of the individual camera views in dependence on the gaze tracking information.

9. The computing device (1) of one of the preceding claims, **characterized in that** the computing device (1) is programmed to calculate an individual bit budget or an individual target quality for each camera view based on a total available transmission rate and the view priorities and to generate (24) the individual video streams in accordance with the respective bit budgets or target qualities.

10. The computing device (1) of claim 9, **characterized in that** generating (24) the individual video streams comprises:

    - for each of the individual camera views and the associated individual bit budget or individual target quality, determining a combination of a spatial resolution and a temporal resolution so as to maximize a resulting video quality; and
    - encoding the image data corresponding to each individual camera view based on the respective spatial resolution and temporal resolution.

11. The computing device (1) of one of the preceding claims, **characterized in that** generating (24) the individual video streams comprises applying to the image data of each of the individual camera views a region of interest mask (M1, M2), wherein the region of interest mask (M1, M2) is dynamically adapted in dependence on the steering angle of the vehicle (3) and/or independence on the velocity of the vehicle (3).

12. The computing device (1) of claim 11, **characterized in that** the region of interest mask (M1, M2) defines a region of interest (ROI1, ROI2) having block-shaped borders, the block-shaped borders being formed by a plurality of border blocks (B1, B2), wherein the effect of the mask (M1, M2) is that in each border block (B1, B2) all pixels are either completely unaffected by the region of interest mask (M1, M2) or completely masked.

13. The computing device (1) of claim 12, **characterized in that** generating (24) the individual video streams comprises encoding the image data filtered by the region of interest mask (M1, M2) by means of an encoder (143-1, 143-n) that operates based on a predetermined pixel block size, wherein each border block (B1, B2) matches the pixel block size of the encoder (143-1, 143-n).

14. A computer-implemented method (2) for generating multi-view video streams, comprising:

    - receiving (21) image data corresponding to at least two individual camera views of an environment of a vehicle (3);
    - receiving (22) information about a current driving situation of the vehicle (3);
    - attributing (23) a view priority to each of the individual camera views based on the information about the current driving situation; and
    - generating (24) an individual video stream from the image data for each of the individual camera views in dependence on the view priorities.

15. A computer program comprising instructions which, when the program is executed by a computing device (1), cause the computing device (1) to carry out the steps as specified in one of the preceding claims.

Fig.1A

*Fig.1B*

2

```
┌─────────────────┐
│       21        │
└─────────────────┘
         │
         ▼
┌─────────────────┐
│       22        │
└─────────────────┘
         │
         ▼
┌─────────────────┐
│       23        │
└─────────────────┘
         │
         ▼
┌─────────────────┐
│       24        │
└─────────────────┘
```

*Fig.2*

$C_6(RL)$     3     $C_1(FL)$

$\gamma_1$

$C_5(R)$     $\alpha$     $C_2(F)$

$\gamma_3$

$C_4(RR)$     $C_3(FR)$

*Fig.3*

EP 4 265 479 A1

Fig.4A

Fig.4B

Europäisches
Patentamt

European
Patent Office

Office européen
des brevets

## EUROPEAN SEARCH REPORT

Application Number

EP 22 16 9334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/347486 A1 (OKOUNEVA GALINA [CA]) 27 November 2014 (2014-11-27) * ROI see [27], fig. 9, cl. 18; paragraphs [0020], [0021], [0027] – [0029]; claims 1, 10, 11, 18; figures 1, 6A, 9 * ----- | 1-15 | INV. B60R1/00 G06T7/579 G06T7/80 |
| Y | US 2018/047288 A1 (CORDELL JOHN PALMER [US] ET AL) 15 February 2018 (2018-02-15) * claims 1, 5, 8-10, 12, 18; figures 1a, 12 * ----- | 1-15 | |

TECHNICAL FIELDS
SEARCHED        (IPC)

B60R
G06T

The present search report has been drawn up for all claims

| Place of search | Date of completion of the search | Examiner |
|---|---|---|
| Munich | 13 September 2022 | Katruff, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 9334

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2022

| Patent document cited in search report | | Publication date | Patent family member(s) | | Publication date |
|---|---|---|---|---|---|
| US 2014347486 | A1 | 27-11-2014 | US | 2014347486 A1 | 27-11-2014 |
| | | | US | 2017134722 A1 | 11-05-2017 |
| | | | US | 2018278925 A1 | 27-09-2018 |
| | | | US | 2020186790 A1 | 11-06-2020 |
| | | | US | 2021392319 A1 | 16-12-2021 |
| US 2018047288 | A1 | 15-02-2018 | CN | 109906165 A | 18-06-2019 |
| | | | CN | 109964260 A | 02-07-2019 |
| | | | EP | 3496969 A1 | 19-06-2019 |
| | | | EP | 3497685 A2 | 19-06-2019 |
| | | | JP | 2019525185 A | 05-09-2019 |
| | | | JP | 2019530061 A | 17-10-2019 |
| | | | US | 2018043829 A1 | 15-02-2018 |
| | | | US | 2018046869 A1 | 15-02-2018 |
| | | | US | 2018046870 A1 | 15-02-2018 |
| | | | US | 2018047288 A1 | 15-02-2018 |
| | | | US | 2019370581 A1 | 05-12-2019 |
| | | | US | 2020110951 A1 | 09-04-2020 |
| | | | US | 2020151479 A1 | 14-05-2020 |
| | | | US | 2020226395 A1 | 16-07-2020 |
| | | | WO | 2018031673 A1 | 15-02-2018 |
| | | | WO | 2018031759 A2 | 15-02-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TITO LU TANG CHEN.** Methods for Improving the Control of Teleoperated Vehicles. *PhD thesis,* 2014
- Content adaptive video compression for autonomous vehicle remote driving. **ITAI DROR ; RAZ BIRMAN ; OFER HADAR.** Applications of Digital Image Processing. SPIE, August 2021, vol. XLIV, 29
- **VADIM FURMAN ; ANDREW HUGHES CHATHAM ; ABHIJIT OGALE ; DMITRI DOLGOV.** *Image and video compression for remote vehicle assistance,* September 2017
- **KAI GAO ; JINGXUAN ZHANG ; Y RICHARD YANG ; JUN BI. PROPHET.** Fast Accurate Model-based Throughput Prediction for Reactive Flow in DC Networks. IEEE INFOCOM, 2018, 9
- An Adaptable and Immersive Real Time Interface for Resolving System Limitations of Automated Vehicles with Teleoperation. **JEAN-MICHAEL GEORG ; FRANK DIERMEYER.** 2019 IEEE International Conference on Systems, Man and Cybernetics (SMC). IEEE, October 2019, 2659-2664
- Teleoperated Driving, a Key Technology for Automated Driving? Comparison of Actual Test Drives with a Head Mounted Display and Conventional Monitors. **JEAN-MICHAEL GEORG ; JOHANNES FEILER ; FRANK DIERMEYER ; MARKUS LIENKAMP.** 2018 21st International Conference on Intelligent Transportation Systems (ITSC). IEEE, November 2018, 3403-3408
- Longtime Effects of Videoquality, Video- canvases and Displays on Situation Awareness during Teleoperation of Automated Vehicles. **JEAN-MICHAEL GEORG ; ELENA PUTZ ; FRANK DIERMEYER.** 2020 IEEE International Conference on Systems, Man, and Cybernetics (SMC). IEEE, October 2020, 248-255
- A system design for teleoperated road vehicles. **SEBASTIAN GNATZIG ; FREDERIC CHUCHOLOWSKI ; TITO TANG ; MARKUS LIENKAMP.** Proceedings of the 10th International Conference on Informatics in Control, Automation and Robotics. SciTePress, 2013, vol. 1, 231-238
- **MARKUS HOFBAUER ; CHRISTOPHER KUHN ; GORAN PETROVIC ; ECKEHARD STEINBACH.** Adaptive multi-view live video streaming for teledriving using a single hardware encoder. *2020 IEEE International Symposium on Multimedia (ISM),* 2020, 9-16
- Enhancing telepresence during the teleoperation of road vehicles using HMD-based mixed reality. **AMIN HOSSEINI ; MARKUS LIENKAMP.** 2016 IEEE Intelligent Vehicles Symposium. IEEE, June 2016, vol. IV, 1366-1373
- Predictive safety based on track-before-detect for teleoperated driving through communication time delay. **AMIN HOSSEINI ; MARKUS LIENKAMP.** 2016 IEEE Intelligent Vehicles Symposium. IEEE, June 2016, vol. IV, 165-172
- Predictive Haptic Feedback for Safe Lateral Control of Teleoperated Road Vehicles in Urban Areas. **AMIN HOSSEINI ; FLORIAN RICHTHAMMER ; MARKUS LIENKAMP.** 2016 IEEE 83rd Vehicular Technology Conference (VTC Spring). IEEE, May 2016, 1-7
- **LEI KANG ; WEI ZHAO ; BOZHAO QI ; SUMAN BANERJEE.** Augmenting self-driving with remote control: Challenges and directions. *Proceedings of the 19th International Workshop on Mobile Computing Systems & Applications,* 2018, 19-24
- The Visual Quality of Teleoperated Driving Scenarios How good is good enough?. **STEFAN NEUMEIER ; SIMON STAPF ; CHRISTIAN FACCHI.** 2020 International Symposium on Networks, Computers and Communications (ISNCC). IEEE, October 2020, 1-8
- **FAN ZHANG ; ECKEHARD STEINBACH ; PENG ZHANG.** Mdvqm: A novel multidimensional no-reference video quality metric for video transcoding. *J. Vis. Comun. Image Represent.,* April 2014, vol. 25 (3), 542-554
- **HANG ZHANG ; JIAHAO LI ; BIN LI ; YAN LU.** A Deep Reinforcement Learning Approach to Multiple Streams' Joint Bitrate Allocation. *IEEE Transactions on Circuits and Systems for Video Technology,* June 2021, vol. 31 (6), 2415-2426